# EUROPÄISCHE PATENTSCHRIFT

(11) **EP 3 783 230 B1**
(45) Veröffentlichungstag und Bekanntmachung des Hinweises auf die Patenterteilung: **09.08.2023**
(21) Anmeldenummer: 19192298.8
(22) Anmeldetag: 19.08.2019
(51) Int. Cl.: F15B 15/28, G01S 13/88

(54) **KOLBEN-ZYLINDER-EINHEIT MIT RADIAL VERBAUTER KOLBENPOSITIONSERFASSUNGSEINHEIT**
PISTON-CYLINDER UNIT WITH RADIALLY INSTALLED PISTON POSITION SENSING UNIT
UNITÉ DE CYLINDRE-PISTON POURVUE D'UNITÉ RADIAL DE DÉTECTION DE POSITION DE PISTON

(43) Veröffentlichungstag der Anmeldung: 24.02.2021
(73) Patentinhaber: Pacoma GmbH, 37269 Eschwege (DE)
(72) Erfinder: Herwig, Karl-Wilhelm, 37214 Witzenhausen (DE); Pik, Alexander, 37269 Eschwege (DE)
(74) Vertreter: Kraus & Weisert Patentanwälte PartGmbB

(56) Entgegenhaltungen:
- EP-A1- 1 752 792
- DE-A1-102016 106 747
- DE-U1-202014 001 604
- US-A1- 2013 312 601

## Beschreibung

### TECHNISCHES GEBIET DER ERFINDUNG

Die Erfindung betrifft eine Kolben-Zylinder-Einheit mit einem Zylinder, einem in dem Zylinder axial beweglich gelagerten Kolben und einer Kolbenpositionserfassungseinheit, die die axiale Position des Kolbens in dem Zylinder erfasst.

Derartige Kolben-Zylinder-Einheiten werden insbesondere in Arbeitsmaschinen, Baumaschinen, landwirtschaftlichen Maschinen, maritimen Maschinen und im Maschinenbau eingesetzt. Es handelt sich insbesondere um hydraulische Kolben-Zylinder-Einheiten.

Die Position des Kolbens in dem Zylinder dient dabei meist zur Erreichung einer definierten Stellung eines mit dem Kolben mittelbar verbundenen Werkzeugs und wird daher ermittelt.

### STAND DER TECHNIK

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus dem deutschen Gebrauchsmuster DE 20 2014 001 604 U1 bekannt. Die Kolbenpositionserfassungseinheit ist in einer sich radial in dem Zylinder erstreckenden Montagebohrung angeordnet.

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus der US-amerikanischen Patentanmeldung US 2013/0312601 A1 bekannt. Die Kolbenpositionserfassungseinheit ist in einer sich radial in dem Zylinder erstreckenden Montagebohrung angeordnet.

Eine Kolben-Zylinder-Einheit mit einem Zylinder, einem in dem Zylinder axial beweglichen gelagerten Kolben und einer Kolbenpositionserfassungseinheit, die mittels Hochfrequenztechnik die axiale Position des Kolbens in dem Zylinder erfasst, ist aus der internationalen Patentanmeldung WO 03/069269 A2 bekannt. Die Kolbenpositionserfassungseinheit weist eine Koppelsonde, ein Haltesystem und einen Wellenleiter auf, die in mehreren axialen Bohrungen in dem Zylinderkopf des Zylinders der Kolben-Zylinder-Einheit angeordnet sind.

Im Stand der Technik der hydraulischen Kolben-Zylinder-Einheiten von Arbeitsmaschinen sind Kolbenpositionserfassungseinheiten, die mittels magnetostriktiver Sensoren die axiale Position des Kolbens in dem Zylinder erfassen, allgemein bekannt. Der Aufbau derartiger magnetostriktiver Sensoren ist vergleichsweise technisch komplex und teuer.

Eine Abstandsmessvorrichtung mit einer Mikrowellen-Antennenanordnung ist aus der europäischen Patentanmeldung EP 1 752 792 A1 bekannt.

Eine Wellenleiter-Kopplungsvorrichtung und Positionssensorvorrichtung für einen Hydraulikzylinder sind aus der deutschen Patentanmeldung DE 10 2016 106 747 A1 bekannt.

### AUFGABE DER ERFINDUNG

Der Erfindung liegt die Aufgabe zugrunde, eine Kolbenpositionserfassungseinheit bereitzustellen, mit der sich übliche Kolben-Zylinder-Einheiten in einfacher Weise für eine Erfassung der axialen Position des Kolbens in dem Zylinder nachrüsten lassen.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Kolben-Zylinder-Einheit mit einem Zylinder, einem in dem Zylinder axial beweglich gelagerten Kolben und einer Kolbenpositionserfassungseinheit, die mittels Hochfrequenztechnik die axiale Position des Kolbens in dem Zylinder erfasst. Die Kolbenpositionserfassungseinheit ist in einer sich radial in dem Zylinder erstreckenden Montagebohrung angeordnet.

Die Erfindung betrifft weiterhin eine Kolbenpositionserfassungseinheit für die Erfassung der Position eines Kolbens in einem Zylinder einer Kolben-Zylinder-Einheit. Die Kolbenpositionserfassungseinheit weist ein Gehäuse auf, das eine Längsmittelachse aufweist. Die Kolbenpositionserfassungseinheit weist weiterhin eine elektronische Baueinheit auf, die in dem Gehäuse angeordnet ist und eine Antenne zum Senden und Empfangen von Hochfrequenzsignalen durch das Gehäuse aufweist. Der Hauptstrahlrichtungssinn der Antenne erstreckt sich senkrecht zu der Längsmittelachse des Gehäuses.

Unter dem in dieser Anmeldung verwendeten Begriff der Hochfrequenztechnik wird dessen weite Auslegung verstanden, d. h. alle Frequenzen zwischen etwa 3 MHz und etwa 30 THz. Gemeint ist insbesondere nicht die enge Definition der internationalen Fernmeldeunion, die unter dem Frequenzbereich der Hochfrequenztechnik nur Frequenzen zwischen 3 MHz und 30 MHz versteht.

Die Kolben-Zylinder-Einheit weist als Hauptkomponenten einen Kolben und einen Zylinder auf. Unter dem Zylinder wird dabei eine größere Einheit verstanden, die insbesondere die Unterkomponenten eines Zylinderrohrs und eines Zylinderkopfs aufweist. Als Kolben wird in dieser Anmeldung die Komponente verstanden, die sich im Zylinderrohr bewegt und dabei mit dem Zylinderrohr einen abgeschlossenen Raum bildet. Der Kolben ist dann insbesondere mit einer Kolbenstange verbunden.

Bei der Kolben-Zylinder-Einheit handelt es sich insbesondere um eine hydraulische Kolben-Zylinder-Einheit. Es kann sich aber auch um eine pneumatische Kolben-Zylinder-Einheit handeln.

Die neue Kolbenpositionserfassungseinheit nutzt ein anderes Anordnungsprinzip als größtenteils aus dem Stand der Technik bekannte Kolbenpositionserfassungseinheiten.

Die Erfassung, Bestimmung, Auswertung, Einstellung und Vorgabe der Position des Kolbens in dem Zylinder einer Kolben-Zylinder-Einheit ist aus verschiedenen Gründen im technischen Gebiet der Arbeitsmaschinen von Interesse. So kann es beispielsweise gewollt sein, eine definierte Endposition des Kolbens und damit des mittelbar mit diesem verbundene Werkzeugs der Arbeitsmaschine sicher anzufahren. Auch eine Automatisierung im Sinne des computergesteuerten Anfahrens verschiedener Positionen des Kolbens nacheinander und eine programmierbare Abfolge sind damit möglich. Des Weiteren können zulässige Arbeitsbereiche, innerhalb derer sich die Kolben-Zylinder-Einheit bewegen darf, definiert und verlässlich eingehalten werden. Auch eine Überlastung der Kolben-Zylinder-Einheit kann durch eine Überwachung der Position des Kolbens und der Last vermieden werden. Durch ein Messen von Druck, Temperatur und Position kann die entsprechende Belastung für den Kolben und den Zylinder ermittelt werden. Bei einer Überlastung können dann entsprechende Maßnahmen vorgeschlagen oder eingeleitet werden.

Bei der Arbeitsmaschine kann es sich z. B. um einen Radlader, Bagger, Kipper, Kran oder Stapler oder eine Hebebühne handeln. Die Kolben-Zylinder-Einheit dient dabei insbesondere zum Lenken, Stützen, Ausschieben, Neigen, Heben oder sonstigen Verfahren der Arbeitsmaschine oder eines Werkzeugs oder anderen Teils der Arbeitsmaschine.

Die Kolbenpositionserfassungseinheit kann als eine kompakte Einbaupatrone ausgebildet sein, die sowohl den Sensor als auch die Auswerteelektronik enthält. Beim Einbau bzw. Ausbau wird also die gesamte Kolbenpositionserfassungseinheit eingesetzt bzw. demontiert.

Es ist aber auch möglich, dass das Gehäuse der Kolbenpositionserfassungseinheit fest im Zylinder montiert und die elektronische Baueinheit im montierten Zustand des Gehäuses in dieses eingesetzt bzw. aus diesem entfernt wird. Damit ist ein Austausch der Kolbenpositionserfassungseinheit möglich, ohne die Kolben-Zylinder-Einheit demontieren zu müssen. Der Austausch der elektronischen Baueinheit kann dabei am voll mit Öl befüllten Zylinder erfolgen. Eine Entleerung, Befüllung und Entlüftung des Zylinders ist somit nicht erforderlich.

Die sich radial in dem Zylinder erstreckende Montagebohrung lässt sich in sehr einfacher Weise in den Zylinder einbringen, insbesondere durch Bohren. Dies geschieht beginnend an der äußeren Oberfläche des Zylinderkopfs.

Die Montagebohrung kann dabei einen im Vergleich zu ihrer Länge vergleichsweise kleinen Durchmesser besitzen, so dass die Montagebohrung in axialer Richtung der Kolben-Zylinder-Einheit nur einen geringen Platzbedarf besitzt. Somit lässt sie sich problemlos bei einer Neukonstruktion einer Kolben-Zylinder-Einheit ohne zusätzlichen Materialbedarf berücksichtigen und bei existierenden Kolben-Zylinder-Einheiten nachträglich einbringen. Für die Integration der neuen Kolbenpositionserfassungseinheit ist somit keine geometrische Änderung der Kolben-Zylinder-Einheit gegenüber einer Kolben-Zylinder-Einheit ohne eine solche Kolbenpositionserfassungseinheit erforderlich. Des Weiteren erfolgt keine nennenswerte Schwächung der Zylinderstruktur.

Der Zylinder kann einen Zylinderkopf aufweisen, wobei dann die Montagebohrung in dem Zylinderkopf der Kolben-Zylinder-Einheit angeordnet ist. Die Kolbenpositionserfassungseinheit kann derart in der Montagebohrung angeordnet sein, dass sich ihre längste Dimension radial in dem Zylinderkopf erstreckt. In dieser Weise wird der vorhandene Bauraum des Zylinderkopfs für die Anordnung der Kolbenpositionserfassungseinheit effektiv genutzt.

Die Montagebohrung ist über eine sich axial erstreckende Sensorsignalbohrung wirkend mit dem Innenraum des Zylinders verbunden. Diese Sensorsignalbohrung ermöglicht das erforderliche Senden und Empfangen der für die Positionserfassung genutzten hochfrequenten Sensorsignale. Wenn es sich um eine hydraulische Kolben-Zylinder-Einheit handelt, ist die Sensorsignalbohrung mit Hydrauliköl gefüllt.

Die Montagebohrung kann mittels einer Ausgleichsbohrung mit der Umgebung verbunden sein. In dieser Weise wird die Montage der Kolbenpositionserfassungseinheit in der ansonsten geschlossenen und durch die Kolbenpositionserfassungseinheit abgedichteten Montagebohrung erleichtert. Es ist aber auch möglich, auf eine solche Ausgleichsbohrung zu verzichten und eine gewisse Komprimierung der Luft in der Montagebohrung zu akzeptieren.

Die Ausgleichsbohrung kann z. B. in dem Gehäuse - insbesondere in dem Gehäuseboden - der Kolbenpositionserfassungseinheit angeordnet sein. Es ist aber auch möglich, dass die Ausgleichsbohrung in dem Zylinder angeordnet ist. Die Ausgleichsbohrung kann in einem von der Öffnung der Montagebohrung abgewandten axialen Endbereich der Montagebohrung angeordnet sein.

Die Kolbenpositionserfassungseinheit weist ein Gehäuse und eine in dem Gehäuse angeordnete elektronische Baueinheit auf. Die elektronische Baueinheit kann dabei durch das Gehäuse gegenüber dem Innenraum des Zylinders abgedichtet sein. In dieser Weise verhindert das Gehäuse das Eindringen von Hydrauliköl in den Innenraum der Kolbenpositionserfassungseinheit, in dem sich das Kernelement der Kolbenpositionserfassungseinheit - nämlich die elektronische Baueinheit - befindet. Die elektronische Baueinheit erfüllt mindestens die Funktion des Sendens und Empfangens der Hochfrequenzsignale. Sie kann aber auch alle weiteren gewünschten Funktionen der Kolbenpositionserfassungseinheit erfüllen, wodurch diese eine kompakte autarke Einheit bildet. Die Kolbenpositionserfassungseinheit kann also als so genannter Smart-Sensor ausgebildet sein. Dies bedeutet, dass neben dem eigentlichen Sensor auch Mittel für die Bestimmung, Berechnung, Auswertung und Übermittlung der Daten in der Kolbenpositionserfassungseinheit enthalten sind. Zu den Daten kann auch die Temperatur gehören.

Das Gehäuse der Kolbenpositionserfassungseinheit kann insbesondere aus Kunststoff oder Keramik bestehen. Das Material und der Aufbau des Gehäuses sind so gewählt, dass sie sich für den Einsatz in diesem druckmäßig hoch beaufschlagten Bereich eignen. Es ist nämlich durchaus üblich, dass in diesem Bereich einer Kolben-Zylinder-Einheit - je nach deren Dimensionierung - ein Druck von etwa 600 bar oder mehr herrscht.

Das Material des Gehäuses der Kolbenpositionserfassungseinheit ist des Weiteren so gewählt, dass es für die Hochfrequenzsignale durchlässig ist. Aus diesem Grund sind beispielsweise Metallwerkstoffe nicht geeignet.

Das Gehäuse kann aus einem thermoplastischen Kunststoff, insbesondere einem Polyaryletherketon, insbesondere Polyetheretherketon (PEEK), bestehen. Derartige Kunststoffe weisen die zuvor beschriebenen gewünschten Eigenschaften der hohen Druckbeständigkeit und gleichzeitigen Durchlässigkeit für Hochfrequenzsignale auf. So hat sich gezeigt, dass ein Gehäuse aus PEEK problemlos bei einem Druck von bis zu 800 bar oder mehr eingesetzt werden kann.

Das Gehäuse der Kolbenpositionserfassungseinheit weist eine Längsmittelachse auf. Das Gehäuse der Kolbenpositionserfassungseinheit kann zylindrisch ausgebildet sein. Diese Ausbildung ermöglicht die einfache Montage der Kolbenpositionserfassungseinheit in der Montagebohrung. Andere Geometrien, z. B. rechteckig oder oval, wären aber ebenfalls möglich.

Das Gehäuse weist an seinem äußeren Umfang eine erste Nut und eine zweite Nut auf, in denen jeweils eine Dichtung angeordnet ist. Diese beiden Dichtungen dienen zum Abdichten des Innenraums des Zylinders gegenüber der Umgebung in dem Bereich, in dem sich die Montagebohrung befindet. Die Verbindung der Montagebohrung mit dem Innenraum des Zylinders ist dabei über die Sensorsignalbohrung realisiert. Die Sensorsignalbohrung ist in radialer Richtung, d. h. heißt in Richtung der Längsmittelachse des Gehäuses, zwischen der ersten Nut und der zweiten Nut angeordnet.

Die effektiven Dichtflächen der Dichtungen sind im Wesentlichen gleich groß. Hierdurch wird eine kräfteneutrale Anordnung der Kolbenpositionserfassungseinheit in der Montagebohrung erreicht. Daraus ergibt sich, dass die Kolbenpositionserfassungseinheit nicht oder nur mit einfachen Sicherungsmitteln in der Montagebohrung gesichert werden muss. Die Kolbenpositionserfassungseinheit kann mit einem einfachen Sicherungselement, z. B. einem Sicherungsring, befestigt werden. Es wäre aber z. B. auch möglich, die Kolbenpositionserfassungseinheit mittels einer Schraubverbindung in der Montagebohrung zu befestigen.

Die Kolbenpositionserfassungseinheit kann ein Anschlusselement für die Übertragung von Daten von der elektronischen Baueinheit aufweisen, wobei das Anschlusselement mit der elektronischen Baueinheit und dem Gehäuse verbunden ist. Bei dem Anschlusselement kann es sich um ein kabelgebundenes oder ein kabelloses Anschlusselement handeln. Im Fall eines kabelgebundenen Anschlusselements handelt es sich um einen Stecker oder eine Buchse. Ein mögliches geeignetes Beispiel hierfür ist ein M12-Stecker bzw. eine M12-Buchse. Eine kabellose Übertragung per WLAN, Bluetooth oder einem anderen geeigneten drahtlosen Übertragungsstandard ist aber ebenfalls möglich.

Die Kolbenpositionserfassungseinheit kann mit Ausnahme eines Teils des Anschlusselements vollständig in der Montagebohrung angeordnet sein. Sie kann auch vollständig in der Montagebohrung angeordnet sein. Dies bedeutet, dass sich die Außengeometrie der Kolben-Zylinder-Einheit gegenüber einer Kolben-Zylinder-Einheit ohne eine solche Kolbenpositionserfassungseinheit nicht verändert. Es ergibt sich somit kein geometrischer Anpassungsbedarf der Arbeitsmaschine.

Die elektronische Baueinheit kann eine Antenne zum Senden und Empfangen von Hochfrequenzsignalen durch das Gehäuse hindurch aufweisen. Die Antenne kann dabei so auf der elektronischen Baueinheit und diese so in dem Gehäuse angeordnet sein, dass die Hochfrequenzsignale durch die Sensorsignalbohrung gerichtet sind. So ermöglichen das Material des Gehäuses und der durch die Sensorsignalbohrung geschaffene freie Raum das ungestörte Senden und Empfangen der Hochfrequenzsignale.

Das Gehäuse kann ein erstes Ausrichtelement und die elektronische Baueinheit ein korrespondierendes zweites Ausrichtelement aufweisen, wobei das erste Ausrichtelement und das zweite Ausrichtelement so aufeinander abgestimmt sind, dass die elektronische Baueinheit nur in genau einer Orientierung vollständig in dem Gehäuse montierbar ist. In dieser Weise wird eine Fehlmontage der elektronischen Baueinheit in dem Gehäuse verhindert.

Das erste Ausrichtelement kann als eine außermittig in einem axialen Endbereich des Gehäuses angeordnete Nut und das zweite Ausrichtelement als eine ebenso außermittig in einem korrespondierenden axialen Endbereich der elektronischen Baueinheit gebildete Feder ausgebildet sein, die gemeinsam eine Nut-Feder-Verbindung bilden. Die Feder kann daher in nur genau einer Relativanordnung zu der Nut in der Nut angeordnet werden. An dem Gehäuse kann ein drittes Ausrichtelement und an der Montagebohrung bzw. dem Zylinder ein korrespondierendes viertes Ausrichtelement angeordnet sein. Das dritte Ausrichtelement kann z. B. ein Vorsprung und das vierte Ausrichtelement eine Ausnehmung oder umgekehrt sein. Andere geometrische Ausbildungen sind ebenfalls möglich. In dieser Weise wird sichergestellt, dass das Gehäuse nur in genau einer Orientierung in dem Zylinder der Kolben-Zylinder-Einheit angeordnet werden kann.

Durch die Ausrichtelement wird insgesamt erreicht, dass der Hauptstrahlrichtungssinn der Antenne korrekt ausgerichtet ist. Der Hauptstrahlrichtungssinn der Antenne erstreckt sich dann senkrecht zu der Längsmittelachse des Gehäuses der Kolbenpositionserfassungseinheit und entlang der Längsmittelachse der Kolben-Zylinder-Einheit oder parallel dazu. Der Hauptstrahlrichtungssinn der Antenne verläuft in Richtung der Sensorsignalbohrung und des Kolbens.

Bei den Hochfrequenzsignalen kann es sich um Mikrowellensignale handeln.

Die Hochfrequenzsignale können eine Frequenz von mindestens 20 GHz, insbesondere mindestens 50 GHz, insbesondere mindestens 100 GHz, insbesondere zwischen 20 GHz und 400 GHz, insbesondere zwischen 100 GHz und 400 GHz, insbesondere zwischen 100 GHz und 300 GHz, insbesondere zwischen 100 GHz und 150 GHz, insbesondere etwa 120 GHz, besitzen.

Die Hochfrequenzsignale können Dauerstrichsignale sein. Die Hochfrequenzsignale können insbesondere frequenzmodulierte Dauerstrichsignale sein. Es können in einer gewissen Abfolge unterschiedliche Frequenzen gesendet werden. Beispielsweise kann es sich dabei um Frequenzen von 120 GHz, 121 GHz und 122 GHz usw. handeln.

Ein frequenzmoduliertes Dauerstrichradar (FMCW-Radar) sendet kontinuierlich ein sich frequenzmäßig änderndes Sendesignal ab. Im Gegensatz zu einem unmodulierten Radar (CW-Radar) kann ein frequenzmoduliertes Dauerstrichradar seine Arbeitsfrequenz während der Messung ändern. Durch diese Änderung der Frequenz wird der für die Messung des Abstands zu dem zu messenden Objekt (hier: der Kolben) erforderliche Zeitbezug geschaffen. Die Entfernungsmessung wird dann durch einen Frequenzvergleich des empfangenen Signals mit dem gesendeten Signal realisiert. Da dieses Messprinzip für sich genommen im Stand der Technik bekannt ist, wird auf eine weitere Beschreibung verzichtet und beispielsweise auf den Artikel "Dauerstrichradar" bei WIKIPEDIA verwiesen (https://de.wikipedia.org/wiki/Dauerstrichradar). Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Montagebohrung die Rede ist, ist dies so zu verstehen, dass genau eine Montagebohrung, zwei Montagebohrungen oder mehr Montagebohrungen vorhanden sind.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht einer beispielhaften Ausführungsform einer neuen Kolben-Zylinder-Einheit mit einer neuen Kolbenpositionserfassungseinheit.
- **Fig. 2**: zeigt eine vergrößerte Ansicht eines Teils der Kolben-Zylinder-Einheit gemäß Fig. 1.
- **Fig. 3**: zeigt das Detail A der Kolben-Zylinder-Einheit aus Fig. 2.
- **Fig. 4**: zeigt eine Ansicht eines Teils der Kolben-Zylinder-Einheit gemäß Fig. 1 von oben.
- **Fig. 5**: zeigt eine perspektivische Explosionsdarstellung eines Teils der Kolben-Zylinder-Einheit gemäß Fig. 1.
- **Fig. 6**: zeigt eine perspektivische Ansicht einer beispielhaften Ausführungsform einer elektronischen Baueinheit der Kolbenpositionserfassungseinheit der Kolben-Zylinder-Einheit gemäß Fig. 1.

### FIGURENBESCHREIBUNG

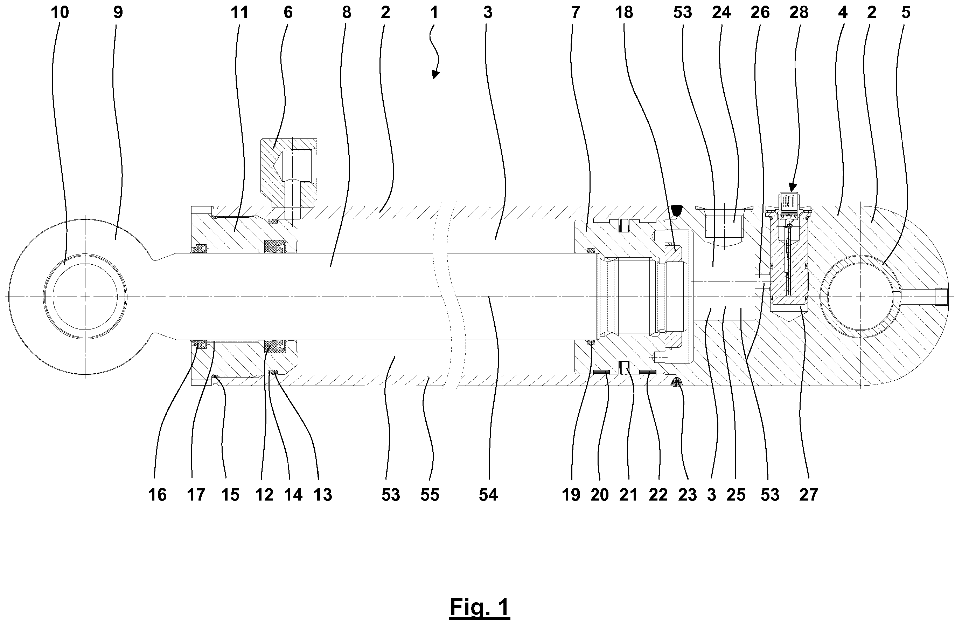

**Fig. 1-6** zeigen verschiedene Ansichten einer beispielhaften Ausführungsform einer neuen Kolben-Zylinder-Einheit 1 sowie deren Teile.

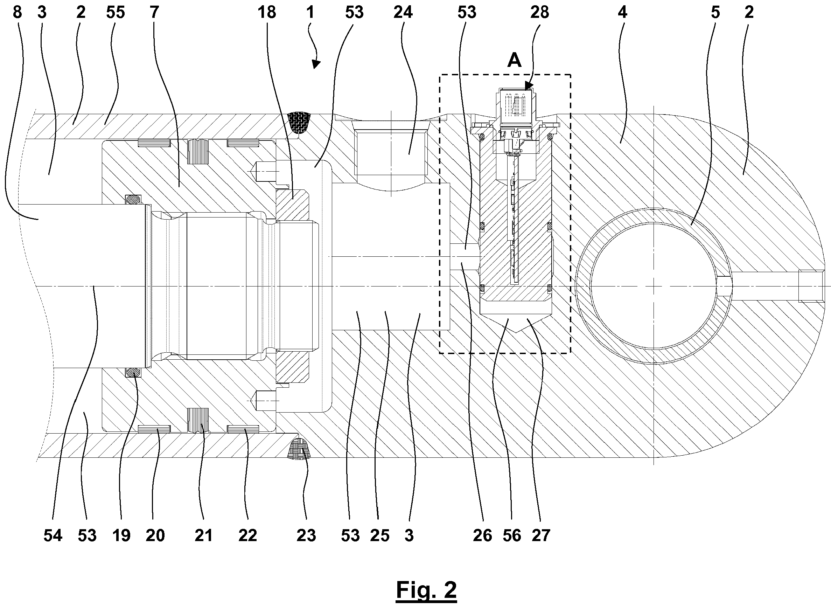

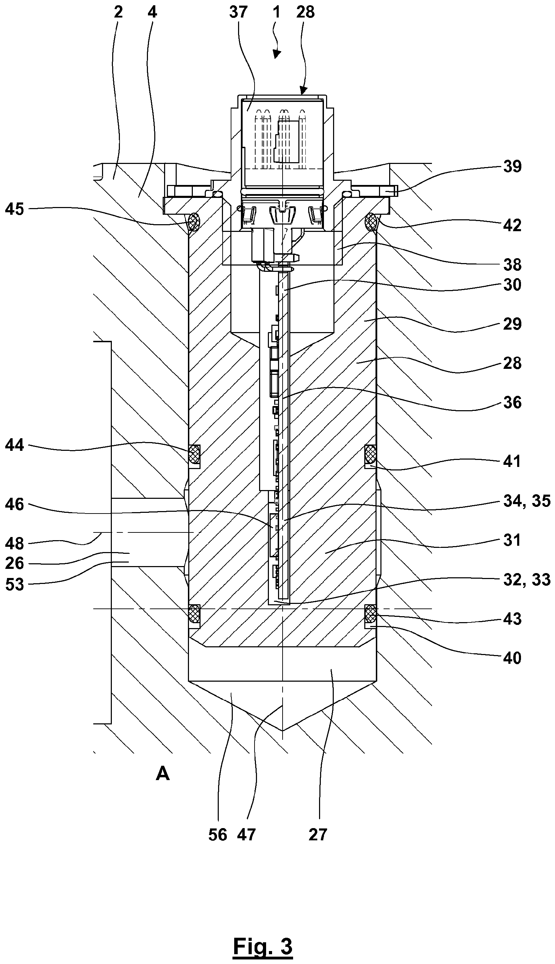

In Fig. 1 ist mittels der Abbruchlinien kenntlich gemacht, dass die Kolben-Zylinder-Einheit 1 tatsächlich länger ausgebildet und nur ein Teil dargestellt ist. Auch in den Fig. 2, 4 und 5 sind vergleichbare Abbruchlinien vorhanden. In Fig. 3 endet die Darstellung ohne Abbruchlinie dort, wo die gestrichelte Linie in Fig. 2 (Detail A) angeordnet ist.

Die Kolben-Zylinder-Einheit 1 weist einen Zylinder 2 mit einem Zylinderrohr 55, einem Innenraum 3 und einem Zylinderkopf 4 auf. Im Bereich des Zylinderkopfs 4 ist eine Lagerbuchse 5 für die Lagerung der Kolben-Zylinder-Einheit 1 an einer nicht dargestellten Arbeitsmaschine angeordnet.

Im vorliegenden Beispiel handelt es sich um eine hydraulische Kolben-Zylinder-Einheit 1, so dass der Innenraum 3 mit Öl 53 gefüllt ist. Hierfür weist der Zylinder 2 einen Ölanschluss 6 und einen Ölanschluss 24 auf. An den Ölanschlüssen 6, 24 sind hier nicht dargestellte Ölleitungen angeschlossen. Ebenfalls nicht dargestellt ist eine Hydraulikpumpe, mittels der in für sich genommen bekannter Weise der Kolben 7 mittels des Öls 53 so mit Druck beaufschlagt wird, dass sich der Kolben 7 und die damit verbundene Kolbenstange 8 in dem jeweiligen Richtungssinn entlang der Längsmittelachse 54 der Kolben-Zylinder-Einheit 1 bewegen. In dieser Weise tritt Öl durch die Ölanschlüsse 6, 24 in den Innenraum 3 des Zylinders 2 ein bzw. verlässt diesen je nach Bewegungsrichtungssinn des Kolbens 7 in dem Zylinder 2. In den Fig. 1 und 2 ist dabei die ganz nach rechts verfahrene Stellung des Kolbens 7 - d. h. die eingefahrene Stellung der Kolben-Zylinder-Einheit 1 - dargestellt.

Wie oberhalb ausgeführt wurde, weist die Kolben-Zylinder-Einheit 1 weiterhin den Kolben 7 auf. Der Kolben 7 ist mit der Kolbenstange 8 verbunden, an deren einen axialen Ende ein Kolbenstangenauge 9 angeordnet ist. Das Kolbenstangenauge 9 weist ebenfalls eine Lagerbuchse 10 auf. Die Lagerbuchse 10 dient für die mittelbare Verbindung des Kolbens 7 mit einem nicht dargestellten Werkzeug oder anderen Teils der Arbeitsmaschine.

Die Kolbenstange 8 ist mittels einer Führungsbuchse 11 in axialer Richtung entlang der Längsmittelachse 54 translatorisch beweglich gelagert. Für die Lagerung und Abdichtung sind eine Stangendichtung 12, ein O-Ring 13 und ein Stützring 14 vorgesehen. Am anderen axialen Ende der Führungsbuchse 11 sind ein weiterer O-Ring 15, ein Abstreifer 16 und ein Gleitlager 17 angeordnet.

Der Kolben 7 ist drehfest auf der Kolbenstange 8 angeordnet und mittels einer Sicherungsmutter 18 gesichert. Des Weiteren sind an dem Kolben 7 ein O-Ring 19, ein Kolbenführungsring 20, eine Kolbendichtung 21, ein weiterer Kolbenführungsring 22 und eine Schweißnaht 23 angeordnet.

In dieser Weise ist der Kolben 7 gemeinsam mit der Kolbenstange 8 und dem Kolbenstangenauge 9 translatorisch hin- und hergehend abdichtend in dem Zylinderrohr 55 des Zylinders 2 gelagert.

An den Teil des Innenraums 3, der durch das Zylinderrohr 55 gebildet wird, schließt sich eine Kammer 25 in dem Zylinderkopf 4 an, die ebenfalls den Innenraum 3 mitbildet und mit Öl 53 gefüllt ist. Die Kammer 25 ist mit dem Ölanschluss 24 verbunden. Mit dieser Kammer 25 ist wiederum eine sich axial erstreckende Sensorsignalbohrung 26 verbunden. Die Sensorsignalbohrung 26 ist also mit dem Innenraum 3 verbunden und mit Öl 53 gefüllt.

Die Sensorsignalbohrung 26 ist wiederum mit einer sich radial in dem Zylinder 2 erstreckenden Montagebohrung 27 verbunden. Die Montagebohrung 27 erstreckt sich bis zur äußeren Oberfläche des Zylinderkopfs 4 und kann mittels einer nicht dargestellten Ausgleichsbohrung mit der Umgebung verbunden sein.

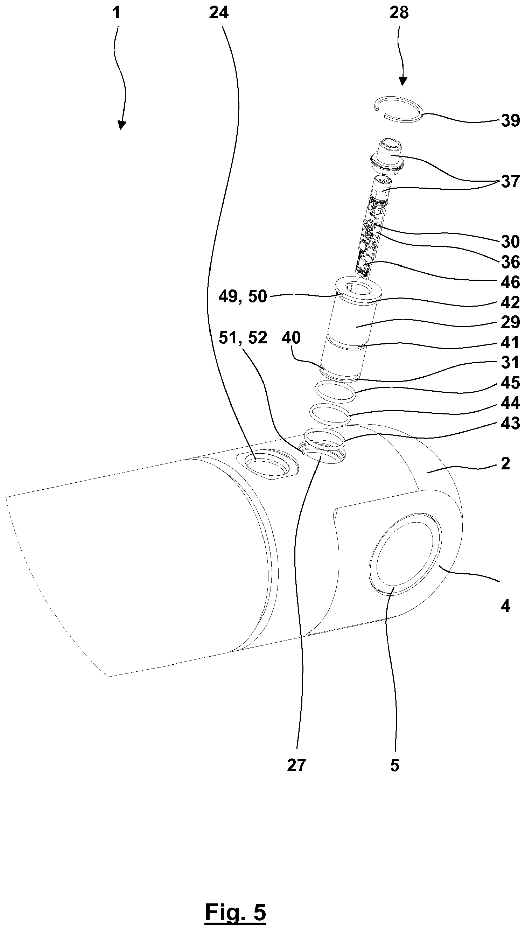

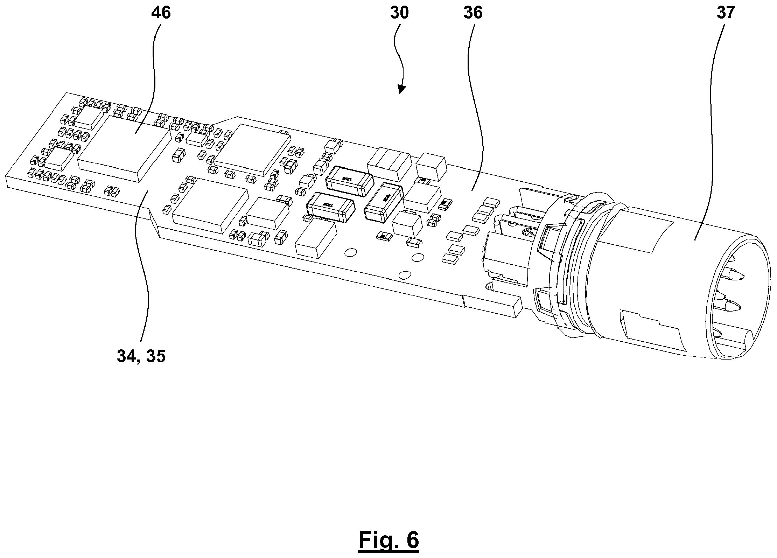

In der Montagebohrung 27 ist eine Kolbenpositionserfassungseinheit 28 angeordnet. Die Kolbenpositionserfassungseinheit 28 dient dazu, mittels Hochfrequenztechnik die axiale Position des Kolbens 7 in dem Zylinder 2 zu erfassen. Die Details der Kolbenpositionserfassungseinheit 28 sind am besten in der vergrößerten Darstellung gemäß Fig. 3 und der Explosionsdarstellung gemäß Fig. 5 zu erkennen. Der Aufbau der elektronischen Baueinheit 30 ist in Fig. 6 genauer dargestellt. Aus Gründen der Übersichtlichkeit wurden die Komponenten der Kolbenpositionserfassungseinheit 28 in den Fig. 1 und 2 nicht mit Bezugszeichen gekennzeichnet.

Die Kolbenpositionserfassungseinheit 28 weist ein Gehäuse 29 und eine in dem Gehäuse 29 angeordnete elektronische Baueinheit 30 auf.

Das Gehäuse 29 ist zylindrisch ausgebildet und an seinem unteren Ende (siehe Fig. 5) durch einen Boden 31 geschlossen. Das entgegengesetzte obere Ende ist offen, so dass von dort die elektronische Baueinheit 30 eingesetzt werden kann. Das Gehäuse 29 besteht aus einem Material, das für Hochfrequenzsignale durchlässig ist. Es handelt sich insbesondere um einen thermoplastischen Kunststoff.

Das Gehäuse 29 weist im Bereich seines geschlossenen Bodens 31 ein erstes Ausrichtelement 32 auf, das als Nut 33 ausgebildet und außermittig in dem zylindrischen Gehäuse 29 angeordnet ist. In dieses erste Ausrichtelement 32 greift ein zweites Ausrichtelement 34 der elektronischen Baueinheit 30 ein. Das zweite Ausrichtelement 34 ist als Feder 35 ausgebildet. In dieser Weise wird eine Nut-Feder-Verbindung gebildet. Auch das zweite Ausrichtelement 34 ist außermittig an der elektronischen Baueinheit 30 gebildet. In diesem Beispiel wird die Feder 35 durch eine Platine 36 der elektronischen Baueinheit 30 gebildet. Somit ist die gesamte Platine 36 außermittig angeordnet. Dies könnte aber auch anders realisiert sein.

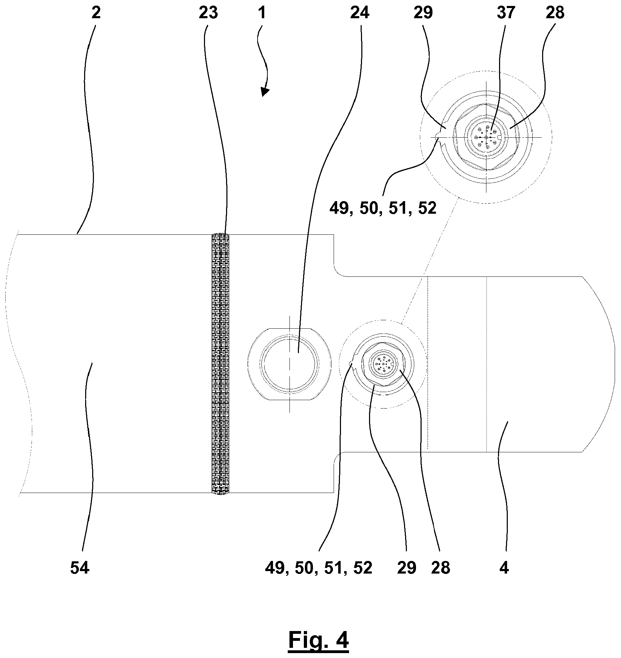

Die korrekte Ausrichtung des Gehäuses 29 in der Montagebohrung 27 wird mittels eines dritten Ausrichtelements 49 realisiert, das hier als Vorsprung 50 an dem Gehäuse 29 ausgebildet ist. Die Montagebohrung 27 weist ein korrespondierendes viertes Ausrichtelement 51 auf, das hier als Ausnehmung 52 ausgebildet ist. Zur besseren Erkennbarkeit ist dieser Bereich in Fig. 4 zusätzlich herausvergrößert dargestellt.

An ihrem gegenüberliegenden axialen Ende ist die Platine 36 mit einem Anschlusselement 37 für die Übertragung von Daten von der elektronischen Baueinheit 30 verbunden. Das Anschlusselement 37 ist in seiner montierten Stellung sowohl mit der elektronischen Baueinheit 30 als auch mit dem Gehäuse 29 verbunden. Die Verbindung zum Gehäuse 29 erfolgt beispielsweise über eine Gewindeverbindung 38. Bei dem Anschlusselement 37 handelt es sich im vorliegenden Fall um einen M12-Stecker. Es könnte sich aber auch um ein anderes Anschlusselement 37 handeln.

Das Gehäuse 30 und somit die Kolbenpositionserfassungseinheit 28 sind mittels eines Sicherungsrings 39 gesichert in der Montagebohrung 27 montiert.

An seinem äußeren Umfang weist das Gehäuse 29 eine erste Nut 40, eine zweite Nut 41 und eine dritte Nut 42 auf. In der ersten Nut 40 ist eine erste Dichtung 43, in der zweiten Nut 41 eine zweite Dichtung 44 und in der dritten Nut 42 eine dritte Dichtung 45 angeordnet. Die erste Dichtung 43 in der ersten Nut 40 dient dabei der Abdichtung gegenüber der Umgebung.

Die Dichtungen 44, 45 hingegen bilden ein Dichtungspaar und dienen der Abdichtung des mit Öl 53 gefüllten Innenraums 3 des Zylinders 2. Die Sensorsignalbohrung 26, in der sich Öl 53 befindet, ist dabei in radialer Richtung - d. h. in Richtung der Längsmittelachse 47 - zwischen der ersten Nut 40 und der zweiten Nut 41 angeordnet. Die effektiven Dichtflächen der Dichtungen 44, 45 sind dabei in etwa gleich groß, so dass sich eine kräfteneutrale Anordnung der Kolbenpositionserfassungseinheit 28 in der Montagebohrung 27 ergibt.

Auf der Platine 36 ist eine Reihe von elektronischen Bauteilen angeordnet. Hierzu gehört eine Antenne 46, die zum Senden und Empfangen von Hochfrequenzsignalen durch das Gehäuse 29 hindurch ausgebildet ist. Die anderen Bauteile dienen der Bestimmung, Berechnung, Auswertung und Übermittlung von Daten in der Kolbenpositionserfassungseinheit 28, sind für sich genommen dem Fachmann geläufig und werden daher nicht weiter erläutert.

Die Antenne 46 ist dabei so auf der Platine 36 angeordnet, die Platine 36 so in dem Gehäuse 29 ausgerichtet und das Gehäuse 29 so in dem Zylinderkopf 4 ausgerichtet, dass die Hochfrequenzsignale der Antenne 46 durch die Sensorsignalbohrung 26 gerichtet sind. Der Hauptstrahlrichtungssinn der Antenne 46 verläuft somit senkrecht zu der Längsmittelachse 47 des Gehäuses 29. Damit erstreckt sich der Hauptstrahlrichtungssinn der Antenne 46 entlang der Längsmittelachse 48 der Sensorsignalbohrung 26 oder derart versetzt dazu, dass die Hochfrequenzsignale durch die Sensorsignalbohrung 26 von der Antenne 46 auf den Kolben 7 gerichtet und die von diesem reflektierten Signale durch die Antenne 46 empfangen werden können.

Beim Betrieb der Kolbenpositionserfassungseinheit 28 sendet diese mittels der Antenne 46 Hochfrequenzsignale durch das Gehäuse 29, die Sensorsignalbohrung 26 und - je nach Stellung des Kolbens 7 - durch einen Teil des Innenraums 3. Die Signale treffen auf den Kolben 7, werden von diesem reflektiert, gelangen auf demselben Weg zurück und werden von der Antenne 46 empfangen.

Die elektronische Baueinheit 30 nimmt mit ihren weiteren elektronischen Bauelementen und dem von diesen ausgeführten Programm eine Auswertung vor und bestimmt somit die momentane Position des Kolbens 7 entlang der Längsmittelachse 54. Diese Bestimmung kann permanent, in definierten Zeitabständen oder zu bestimmten Zeitpunkten durchgeführt werden. Über das Anschlusselement 37 wird das Ergebnis oder ein damit in Verbindung stehender Befehl an eine damit verbundene elektronische Recheneinheit der Arbeitsmaschine weitergegeben, deren Teil die Kolben-Zylinder-Einheit 1 ist.

### BEZUGSZEICHENLISTE

- 1: Kolben-Zylinder-Einheit
- 2: Zylinder
- 3: Innenraum
- 4: Zylinderkopf
- 5: Lagerbuchse
- 6: Ölanschluss
- 7: Kolben
- 8: Kolbenstange
- 9: Kolbenstangenauge
- 10: Lagerbuchse
- 11: Führungsbuchse
- 12: Stangendichtung
- 13: O-Ring
- 14: Stützring
- 15: O-Ring
- 16: Abstreifer
- 17: Gleitlager
- 18: Sicherungsmutter
- 19: O-Ring
- 20: Kolbenführungsring
- 21: Kolbendichtung
- 22: Kolbenführungsring
- 23: Schweißnaht
- 24: Ölanschluss
- 25: Kammer
- 26: Sensorsignalbohrung
- 27: Montagebohrung
- 28: Kolbenpositionserfassungseinheit
- 29: Gehäuse
- 30: elektronische Baueinheit
- 31: Boden
- 32: erstes Ausrichtelement
- 33: Nut
- 34: zweites Ausrichtelement
- 35: Feder
- 36: Platine
- 37: Anschlusselement
- 38: Gewindeverbindung
- 39: Sicherungsring
- 40: erste Nut
- 41: zweite Nut
- 42: dritte Nut
- 43: erste Dichtung
- 44: zweite Dichtung
- 45: dritte Dichtung
- 46: Antenne
- 47: Längsmittelachse
- 48: Längsmittelachse
- 49: drittes Ausrichtelement
- 50: Vorsprung
- 51: viertes Ausrichtelement
- 52: Ausnehmung
- 53: Öl
- 54: Längsmittelachse
- 55: Zylinderrohr
- 56: Luft

## Patentansprüche

1. Kolben-Zylinder-Einheit (1), mit
einem Zylinder (2),
einem in dem Zylinder (2) axial beweglich gelagerten Kolben (7),
einer Kolbenpositionserfassungseinheit (28), die mittels Hochfrequenztechnik die axiale Position des Kolbens (7) in dem Zylinder erfasst (2), wobei
die Kolbenpositionserfassungseinheit (28) in einer sich radial in dem Zylinder (2) erstreckenden Montagebohrung (27) angeordnet ist und
die Montagebohrung (27) über eine sich axial in dem Zylinder (2) erstreckende Sensorsignalbohrung (26) wirkend mit dem Innenraum (3) des Zylinders (2) verbunden ist, wobei die Sensorsignalbohrung (26) das Senden und Empfangen der für die Positionserfassung genutzten Sensorsignale ermöglicht und die Kolbenpositionserfassungseinheit (28) ein Gehäuse (29) aufweist, welches eine Längsmittelachse (47) aufweist,
**dadurch gekennzeichnet, dass**
die Kolbenpositionserfassungseinheit (28) eine in dem Gehäuse (29) angeordnete elektronische Baueinheit (30) aufweist,
das Gehäuse (29) an seinem äußeren Umfang eine erste Nut (40) und eine zweite Nut (41) aufweist, wobei in der ersten Nut (40) eine erste Dichtung (43) und in der zweiten Nut (41) eine zweite Dichtung (44) angeordnet ist,
die Sensorsignalbohrung (26) in radialer Richtung des Zylinders (2), d. h. in Richtung der Längsmittelachse (47) des Gehäuses (29), zwischen der ersten Nut (40) und der zweiten Nut (41) angeordnet ist und
die effektiven Dichtflächen der ersten Dichtung (43) und der zweiten Dichtung (44) im Wesentlichen gleich groß sind.

2. Kolben-Zylinder-Einheit (1) nach Anspruch 1, **dadurch gekennzeichnet, dass**
der Zylinder (2) ein Zylinderrohr (55) und einen Zylinderkopf (4) aufweist,
die Montagebohrung (27) in dem Zylinderkopf (4) angeordnet ist,
die Kolbenpositionserfassungseinheit (28) derart in der Montagebohrung (27) angeordnet ist, dass sich ihre längste Dimension radial in dem Zylinderkopf (4) erstreckt.

3. Kolben-Zylinder-Einheit (1) nach Anspruch 1 oder 2, **dadurch gekennzeichnet, dass** die elektronische Baueinheit (30) durch das Gehäuse (29) gegenüber dem Innenraum (3) des Zylinders (2) abgedichtet ist.

4. Kolben-Zylinder-Einheit (1) nach mindestens einem der vorhergehenden Ansprüche, **dadurch gekennzeichnet, dass** die Kolbenpositionserfassungseinheit (28) ein Anschlusselement (37) für die Übertragung von Daten von der elektronischen Baueinheit (30) aufweist, wobei das Anschlusselement (37) mit der elektronischen Baueinheit (30) und dem Gehäuse (29) verbunden ist.

5. Kolben-Zylinder-Einheit (1) nach Anspruch 4, **dadurch gekennzeichnet, dass** die Kolbenpositionserfassungseinheit (28) mit Ausnahme eines Teils des Anschlusselements (37) vollständig in der Montagebohrung (27) angeordnet ist.

6. Kolben-Zylinder-Einheit (1) nach mindestens einem der vorhergehenden Ansprüche, **dadurch gekennzeichnet, dass** die elektronische Baueinheit (30) eine Antenne (46) zum Senden und Empfangen von Hochfrequenzsignalen durch das Gehäuse (29) hindurch aufweist.

7. Kolben-Zylinder-Einheit (1) nach Anspruch 6, **dadurch gekennzeichnet, dass** die Antenne (46) so auf der elektronische Baueinheit (30) und diese so in dem Gehäuse (29) angeordnet ist, dass die Hochfrequenzsignale durch die Sensorsignalbohrung (26) gerichtet sind.

8. Kolben-Zylinder-Einheit (1) nach mindestens einem der vorhergehenden Ansprüche, **dadurch gekennzeichnet, dass** das Gehäuse (29) ein erstes Ausrichtelement (32) und die elektronische Baueinheit (30) ein korrespondierendes zweites Ausrichtelement (34) aufweist, wobei das erste Ausrichtelement (32) und das zweite Ausrichtelement (34) so aufeinander abgestimmt sind, dass die elektronische Baueinheit (30) nur in genau einer Orientierung vollständig in dem Gehäuse (29) montierbar ist.

9. Kolben-Zylinder-Einheit (1) nach Anspruch 8, **dadurch gekennzeichnet, dass** das erste Ausrichtelement (32) als eine außermittig in einem axialen Endbereich des Gehäuses (29) angeordnete Nut (33) und das zweite Ausrichtelement (34) als eine ebenso außermittig in einem korrespondierenden axialen Endbereich der elektronischen Baueinheit (30) gebildete Feder (35) ausgebildet ist.

10. Kolbenpositionserfassungseinheit (28) für die Erfassung der axialen Position eines Kolbens (4) in einem Zylinder (2) einer Kolben-Zylinder-Einheit (1), wobei
die Kolbenpositionserfassungseinheit (28) mittels Hochfrequenztechnik die axiale Position des Kolbens (4) in dem Zylinder erfassen kann und
die Kolbenpositionserfassungseinheit (28) ein Gehäuse (29) aufweist, welches zylindrisch ausgebildet ist und eine Längsmittelachse (47) aufweist,
**dadurch gekennzeichnet, dass**
das Gehäuse (29) an seinem äußeren Umfang eine erste Nut (40) und eine zweite Nut (41) aufweist, wobei in der ersten Nut (40) eine erste Dichtung (43) und in der zweiten Nut (41) eine zweite Dichtung (44) angeordnet ist, wobei die effektiven Dichtflächen der ersten Dichtung (43) und der zweiten Dichtung (44) im Wesentlichen gleich groß sind, und
in dem Gehäuse (29) eine elektronische Baueinheit (30) angeordnet ist, welche eine Antenne (46) zum Senden und Empfangen von Hochfrequenzsignalen durch das Gehäuse (29) hindurch aufweist, wobei der Hauptstrahlrichtungssinn der Antenne (46) senkrecht zu der Längsmittelachse (47) des Gehäuses (29) verläuft, womit sich der Hauptstrahlungsrichtungssinn der Antenne (46) entlang einer Achse (48) erstreckt, die senkrecht zu der Längsmittelachse (47) ist, wobei die Achse (48) in Richtung der Längsmittelachse (47) zwischen der ersten Nut (40) und der zweiten Nut (41) verläuft.

11. Kolbenpositionserfassungseinheit (28) nach Anspruch 10, **dadurch gekennzeichnet, dass**
- die elektronische Baueinheit (30) durch das Gehäuse (29) abgedichtet ist und/oder
- die Kolbenpositionserfassungseinheit (28) ein Anschlusselement (37) für die Übertragung von Daten von der elektronischen Baueinheit (30) aufweist, wobei das Anschlusselement (37) mit der elektronischen Baueinheit (30) und dem Gehäuse (29) verbunden ist und/oder
- das Gehäuse (29) ein erstes Ausrichtelement (32) und die elektronische Baueinheit (30) ein korrespondierendes zweites Ausrichtelement (34) aufweist, wobei das erste Ausrichtelement (32) und das zweite Ausrichtelement (34) so aufeinander abgestimmt sind, dass die elektronische Baueinheit (30) nur in genau einer Orientierung vollständig in dem Gehäuse (29) montierbar ist, wobei insbesondere das erste Ausrichtelement (32) als eine außermittig in einem axialen Endbereich des Gehäuses (29) angeordnete Nut (33) und das zweite Ausrichtelement (34) als eine ebenso außermittig in einem korrespondierenden axialen Endbereich der elektronischen Baueinheit (30) gebildete Feder (35) ausgebildet ist.

## Claims

1. A piston-cylinder unit (1), with
a cylinder (2)
a piston (7) mounted axially movably in the cylinder (2),
a piston position detection unit (28) which detects the axial position of the piston (7) in the cylinder (2) by means of high-frequency technology, wherein
the piston position detection unit (28) is arranged in a mounting bore (27) extending radially in the cylinder (2), and
the mounting bore (27) is operatively connected to the interior (3) of the cylinder (2) via a sensor signal bore (26) extending axially in the cylinder (2), wherein the sensor signal bore (26) enables transmitting and receiving of the sensor signals used for the position detection, and the piston position detection unit (28) includes a housing (29) having a longitudinal center axis (47)
**characterized in that**
the piston position detection unit (28) includes an electronic assembly (30) arranged in the housing (29),
the housing (29) has a first groove (40) and a second groove (41) on its outer circumference, wherein a first seal (43) is arranged in the first groove (40) and a second seal (44) is arranged in the second groove (41),
the sensor signal bore (26) is arranged in radial direction of the cylinder (2), i.e., in the direction of the longitudinal center axis (47) of the housing (29), between the first groove (40) and the second groove (41), and
the effective sealing surfaces of the first seal (43) and the second seal (44) are substantially of equal size.

2. The piston-cylinder unit (1) according to claim 1, **characterized in that**
the cylinder (2) includes a cylinder tube (55) and a cylinder head (4),
the mounting bore (27) is arranged in the cylinder head (4),
the piston position detection unit (28) is arranged in the mounting bore (27) such that its longest dimension extends radially in the cylinder head (4).

3. The piston-cylinder unit (1) according to claim 1 or 2, **characterized in that** the electronic assembly (30) is sealed off from the interior (3) of the cylinder (2) by the housing (29).

4. The piston-cylinder unit (1) according to at least one of the preceding claims, **characterized in that** the piston position detection unit (28) includes a connection element (37) for the transmission of data from the electronic assembly (30), wherein the connection element (37) is connected to the electronic assembly (30) and the housing (29).

5. The piston-cylinder unit (1) according to claim 4, **characterized in that** the piston position detection unit (28) is completely arranged in the mounting bore (27) with the exception of a part of the connecting element (37).

6. The piston-cylinder unit (1) according to at least one of the preceding claims, **characterized in that** the electronic assembly (30) includes an antenna (46) for transmitting and receiving high-frequency signals through the housing (29).

7. The piston-cylinder unit (1) according to claim 6, **characterized in that** the antenna (46) is arranged on the electronic assembly (30) and this is arranged in the housing (29) such that the high-frequency signals are directed through the sensor signal bore (26).

8. The piston-cylinder unit (1) according to at least one of the preceding claims, **characterized in that** the housing (29) includes a first alignment element (32) and the electronic assembly (30) includes a corresponding second alignment element (34), wherein the first alignment element (32) and the second alignment element (34) are matched to one another such that the electronic assembly (30) is completely mountable in the housing (29) in exactly one orientation only.

9. The piston-cylinder unit (1) according to claim 8, **characterized in that** the first alignment element (32) is formed as a groove (33) arranged eccentrically in an axial end region of the housing (29) and the second alignment element (34) is formed as a spring (35) likewise formed eccentrically in a corresponding axial end region of the electronic assembly (30).

10. A piston position detection unit (28) for the detection of the axial position of a piston (4) in a cylinder (2) of a piston-cylinder unit (1), wherein
the piston position detection unit (28) can detect the axial position of the piston (4) in the cylinder by means of high-frequency technology, and
the piston position detection unit (28) includes a housing (29) which is formed cylindrically and includes a longitudinal center axis (47),
**characterized in that**
the housing (29) includes a first groove (40) and a second groove (41) on its outer circumference, wherein a first seal (43) is arranged in the first groove (40) and a second seal (44) is arranged in the second groove (41), wherein the effective sealing surfaces of the first seal (43) and the second seal (44) are substantially of equal size, and
an electronic assembly (30) is arranged in the housing (29) including an antenna (46) for transmitting and receiving high frequency signals through the housing (29), wherein the main radiation direction sense of the antenna (46) is perpendicular to the longitudinal center axis (47) of the housing (29) whereby the main radiation direction sense of the antenna (46) extends along an axis (48) that is perpendicular with respect to the longitudinal center axis (47), wherein the axis (48) runs in direction of the longitudinal center axis (47) between the first groove (40) and the second groove (41).

11. The piston position detection unit (28) according to claim 10, **characterized in that**
- the electronic assembly (30) is sealed by the housing (29) and/or
- the piston position detection unit (28) includes a connection element (37) for the transmission of data from the electronic assembly (30), wherein the connection element (37) is connected to the electronic assembly (30) and the housing (29) and/or
- the housing (29) includes a first alignment element (32) and the electronic assembly (30) includes a corresponding second alignment element (34), wherein the first alignment element (32) and the second alignment element (34) are matched to one another such that the electronic assembly (30) is completely mountable in the housing (29) in exactly one orientation only, wherein in particular the first alignment element (32) is formed as a groove (33) arranged eccentrically in an axial end region of the housing (29) and the second alignment element (34) is formed as a spring (35) likewise formed eccentrically in a corresponding axial end region of the electronic assembly (30).

## Revendications

1. Unité de cylindre-piston (1), comportant
un cylindre (2),
un piston (7) monté mobile axialement dans le cylindre (2),
une unité de détection de position de piston (28) qui détecte la position axiale du piston (7) dans le cylindre (2) à l'aide d'une technologie haute fréquence, dans laquelle
l'unité de détection de position de piston (28) est disposée dans un trou de montage (27) s'étendant radialement dans le cylindre (2), et
le trou de montage (27) étant relié de manière opérationnelle à l'espace intérieur (3) du cylindre (2) par l'intermédiaire d'un trou de signal de capteur (26) s'étendant axialement dans le cylindre (2), le trou de signal de capteur (26) permettant l'envoi et la réception des signaux de capteurs utilisés pour la détection de position et l'unité de détection de position de piston (28) présentant un boîtier (29) comportant un axe médian longitudinal (47),
**caractérisée en ce que**
l'unité de détection de position de piston (28) présente un composant électronique (30) disposé dans le boîtier (29),
le boîtier (29) présente une première rainure (40) et une seconde rainure (41) sur sa circonférence extérieure, un premier élément d'étanchéité (43) étant disposé dans la première rainure (40) et un second élément d'étanchéité (44) étant disposé dans la seconde rainure (41),
le trou de signal de capteur (26) est disposé entre la première rainure (40) et la seconde rainure (41) dans le sens radial du cylindre (2), c'est-à-dire dans le sens de l'axe médian longitudinal (47) du boîtier (29), entre la première rainure (40) et la seconde rainure (41) et
les surfaces d'étanchéité effectives du premier élément d'étanchéité (43) et du second élément d'étanchéité (44) sont sensiblement de même taille.

2. Unité de cylindre-piston (1) selon la revendication 1,
**caractérisée en ce que**
le cylindre (2) présente un tube de cylindre (55) et une tête de cylindre (4),
le trou de montage (27) est disposé dans la tête de cylindre (4),
l'unité de détection de position de piston (28) est disposée dans le trou de montage (27) de telle sorte que sa dimension la plus grande s'étend radialement dans la tête de cylindre (4).

3. Unité de cylindre-piston (1) selon la revendication 1 ou 2,
**caractérisée en ce que** le composant électronique (30) est étanchéifié par le boîtier (29) par rapport à l'espace intérieur (3) du cylindre (2).

4. Unité de cylindre-piston (1) selon au moins l'une quelconque des revendications précédentes, **caractérisée en ce que** l'unité de détection de position de piston (28) présente un élément de raccordement (37) pour le transfert de données à partir du composant électronique (30), l'élément de raccordement (37) étant connecté au composant électronique (30) et au boîtier (29).

5. Unité de cylindre-piston (1) selon la revendication 4, **caractérisée en ce que** l'unité de détection de position de piston (28) est disposée entièrement dans le trou de montage (27), à l'exception d'une partie de l'élément de raccordement (37).

6. Unité de cylindre-piston (1) selon au moins l'une quelconque des revendications précédentes, **caractérisée en ce que** le composant électronique (30) présente une antenne (46) destinée à envoyer et recevoir des signaux haute fréquence à travers le boîtier (29).

7. Unité de cylindre-piston (1) selon la revendication 6, **caractérisée en ce que** l'antenne (46) est disposée sur le composant électronique (30) et que celui-ci est disposé lui-même dans le boîtier (29) de telle sorte que les signaux haute fréquence sont dirigés à travers le trou de signal de capteur (26).

8. Unité de cylindre-piston (1) selon au moins l'une quelconque des revendications précédentes, **caractérisée en ce que** le boîtier (29) présente un premier élément d'alignement (32) et le composant électronique (30) présente un second élément d'alignement (34) correspondant, le premier élément d'alignement (32) et le second élément d'alignement (34) étant alignés de sorte que le composant électronique (30) ne puisse être monté dans le boîtier (29) que dans une orientation précise.

9. Unité de cylindre-piston (1) selon la revendication 8, **caractérisée en ce que** le premier élément d'alignement (32) est réalisé sous la forme d'une rainure (33) disposée excentrique dans une section d'extrémité du boîtier (29) et le second élément d'alignement (34) est réalisé sous la forme d'un ressort (35) également formé excentrique dans une section d'extrémité axiale correspondante du composant électronique (30).

10. Unité de détection de position de piston (28) pour la détection d'une position axiale d'un piston (4) dans un cylindre (2) d'une unité de cylindre-piston (1),
l'unité de détection de position de piston (28) pouvant détecter la position axiale du piston (4) dans le cylindre à l'aide d'une technologie haute fréquence, et
l'unité de détection de position de piston (28) présentant un boîtier (29) de forme cylindrique et présentant un axe médian longitudinal (47),
**caractérisée en ce que**
le boîtier (29) présente une première rainure (40) et une seconde rainure (41) sur sa circonférence extérieure, un premier élément d'étanchéité (43) étant disposé dans la première rainure (40) et un second élément d'étanchéité (44) étant disposé dans la seconde rainure (41), les surfaces d'étanchéité effectives du premier élément d'étanchéité (43) et du second élément d'étanchéité (44) étant sensiblement de même taille, et
un composant électronique (30) est disposé dans le boîtier (29), lequel composant électronique présente une antenne (46) destinée à envoyer et recevoir des signaux haute fréquence à travers le boîtier (29), le sens d'orientation de faisceau principal de l'antenne (46) s'étendant perpendiculairement à l'axe médian longitudinal (47) du boîtier (29), ce qui permet au sens d'orientation de faisceau principal de l'antenne (46) de s'étendre le long d'un axe (48) qui est perpendiculaire à l'axe médian longitudinal (47), l'axe (48) s'étendant dans le sens de l'axe médian longitudinal (47), entre la première rainure (40) et la seconde rainure (41).

11. Unité de détection de position de piston (28) selon la revendication 10, **caractérisée en ce que**
- le composant électronique (30) est étanchéifié par le boîtier (29), et/ou
- l'unité de détection de position de piston (28) présente un élément de raccordement (37) pour le transfert de données à partir du composant électronique (30), l'élément de raccordement (37) étant connecté au composant électronique (30) et au boîtier (29), et/ou
- le boîtier (29) présente un premier élément d'alignement (32) et le composant électronique (30) présente un second élément d'alignement (34) correspondant, le premier élément d'alignement (32) et le second élément d'alignement (34) étant alignés de sorte que le composant électronique (30) ne puisse être monté dans le boîtier (29) que dans une orientation précise, le premier élément d'alignement (32) étant réalisé en particulier sous la forme d'une rainure (33) disposée excentrique dans une section d'extrémité du boîtier (29) et le second élément d'alignement (34) étant réalisé en particulier sous la forme d'un ressort (35) également formé excentrique dans une section d'extrémité axiale correspondante du composant électronique (30).
